# EUROPÄISCHE PATENTSCHRIFT

(11) **EP 4 034 813 B1**
(45) Veröffentlichungstag und Bekanntmachung des Hinweises auf die Patenterteilung: **05.11.2025**
(21) Anmeldenummer: 20774959.9
(22) Anmeldetag: 17.09.2020
(51) Int. Cl.: F24C 7/08

(54) **GERÄTEBEDIENUNG**
DEVICE OPERATION
COMMANDE D'UN APPAREIL

(30) Priorität: 24.09.2019 DE 102019214522
(43) Veröffentlichungstag der Anmeldung: 03.08.2022
(73) Patentinhaber: BSH Hausgeräte GmbH, 81739 München (DE)
(72) Erfinder: HEUPEL, Sven, 85579 Neubiberg (DE); SÖLLNER, Christoph, 81475 München (DE)
(86) Internationale Anmeldenummer: PCT/EP2020/075944
(87) Internationale Veröffentlichungsnummer: WO 2021/058363

(56) Entgegenhaltungen:
- EP-A1- 2 599 424
- EP-A1- 3 112 758
- EP-B1- 2 599 424
- WO-A1-2015/078642
- DE-A1- 102017 123 955

## Beschreibung

Die Erfindung betrifft die Bedienung eines Geräts durch einen Benutzer. Insbesondere betrifft die Erfindung die interaktive Bedienung eines Hausgeräts.

Ein Hausgerät, beispielsweise ein Herd, eine Waschmaschine oder ein Geschirrspüler, umfasst eine Bedienvorrichtung, die üblicherweise eine optische Ausgabeeinrichtung und eine manuelle Eingabeeinrichtung umfasst. Für einen bestimmten Gerätezustand kann die Ausgabeeinrichtung auch weggelassen werden. Beispielsweise kann ein Geschirrspüler eine Statusanzeige auf einen Fußboden projizieren. Die Eingabeeinrichtung ist manuell zu betätigen und kann beispielsweise einen Taster, einen Schalter oder eine Sensorfläche umfassen.

EP 2 599 424 B1 schlägt vor, einen Geschirrspüler mittels einer Folge von Klopfzeichen an der Tür des Gerätes zu steuern. Aus der DE 10 2017 123 955 A1 ist eine Bedienvorrichtung gemäß dem Oberbegriff des Anspruchs 1 vorbekannt, die einen Trittschall eines Nutzers eines Hausgerätes sensiert Die WO 2015 / 078 642 A1 wiederum befasst sich mit einer Dunstabzugshaube, die einen Projektor umfasst.

Bekannte Bedienvorrichtungen sind in ihrer Funktionsweise limitiert und erfordern üblicherweise eine manuelle Betätigung. Eine der vorliegenden Erfindung zugrunde liegende Aufgabe besteht in der Angabe einer verbesserten Technik zur Bedienung eines Hausgeräts. Die Erfindung löst diese Aufgabe mittels der Gegenstände der unabhängigen Ansprüche. Unteransprüche geben bevorzugte Ausführungsformen wieder.

Nach einem ersten Aspekt der Erfindung umfasst eine Bedienvorrichtung für ein Hausgerät unter anderem einen ersten und einen zweiten Körperschallsensor und eine Verarbeitungseinrichtung Die Körperschallsensoren sind dazu eingerichtet, beabstandet voneinander an der Oberfläche eines vorbestimmten Körpers angebracht zu werden. Die Verarbeitungseinrichtung ist dazu eingerichtet, auf der Basis von Sensorwerten der Körperschallsensoren einen Ort an der Oberfläche des Körpers zu bestimmen, an dem ein Impuls in den Körper eingeleitet wurde; zu bestimmen, dass der Ort in einem vorbestimmten Abschnitt der Oberfläche liegt; und eine Funktion des Hausgeräts zu bestimmen, die dem Abschnitt zugeordnet ist.

Durch die Verwendung von zwei voneinander beabstandeten Körperschallsensoren kann der Ort, an dem der Impuls in den Körper eingeleitet wurde, genauer bestimmt werden. Insbesondere kann der Ort verbessert einem von möglicherweise mehreren vorbestimmten Abschnitten zugeordnet werden. Eine Bedienung des Hausgeräts kann dadurch differenzierter erfolgen. Der Impuls kann insbesondere durch einen Benutzer des Hausgeräts erzeugt werden, beispielsweise mit einem Finger, einem Knöchel oder einem Fuß.

Die Bestimmung des Orts kann auf einen Bereich beschränkt sein, der zwischen den Körperschallsensoren liegt. Hier kann ein zeitlicher Unterschied, mit dem Körperschall an den verschiedenen Sensoren eintrifft, eindeutig einem Ort auf einer Verbindung zwischen den Körperschallsensoren zugeordnet werden. Der Bereich kann beispielsweise durch Begrenzungen oder eine Struktur des Körpers eingegrenzt sein. Der Bereich kann auch beispielsweise mittels eines vibrationsdämmenden Materials begrenzt sein. Sollen Impulse an mehr als einem Abschnitt voneinander unterschieden werden können, so können die Abschnitte in ähnlicher Weise voneinander abgegrenzt sein.

In einer ersten Variante ist der Körper vom Hausgerät umfasst. Der Körper kann beispielsweise ein Gehäuse, eine Abdeckung, eine Tür oder eine Blende des Hausgeräts umfassen. Das Hausgerät kann insbesondere ein Küchengerät umfassen. Beispielsweise kann das Hausgerät eine Waschmaschine, eine Spülmaschine, einen Herd, eine Dunstabzugshaube oder auch ein Kleingerät wie beispielsweise einen Wasserkocher oder einen Toaster umfassen.

In einer zweiten Variante ist der Körper nicht vom Hausgerät umfasst. Dabei ist bevorzugt, dass das Hausgerät dazu eingerichtet ist, an dem Körper anzuliegen. So können die Körperschallsensoren verbessert am Hausgerät angebracht sein und trotzdem einen guten Kontakt zu dem Körper aufweisen. Insbesondere kann der Körper eine Wand aufweisen, wobei das Hausgerät an der Wand befestigt ist, oder einen Boden, wobei das Hausgerät auf dem Boden steht.

In einer dritten Variante kann das Hausgerät auch getrennt von der Oberfläche angeordnet sein. In diesem Fall sind die Körperschallsensoren und optional auch die Verarbeitungseinrichtung an dem Körper angebracht und es kann eine Steuerverbindung zum Hausgerät vorgesehen sein. Die Steuerverbindung kann drahtgebunden oder drahtlos ausgebildet sein.

Die Bedienvorrichtung umfasst eine Anzeigevorrichtung zur Bereitstellung eines optischen Hinweises auf der Oberfläche. Die Anzeigevorrichtung ist bevorzugt dazu eingerichtet, den Hinweis dynamisch und insbesondere in Abhängigkeit eines Betriebszustands des Hausgeräts oder der Verarbeitungseinrichtung darzustellen. So kann verbessert eine Benutzerführung für die Bedienung des Hausgeräts realisiert sein. Die Anzeigevorrichtung kann vektoriell arbeiten und beispielsweise einen ablenkbaren Laser umfassen, oder eine Projektionseinrichtung, die beispielsweise eine Matrix aus steuerbaren Lichtpunkten auf der Oberfläche darstellen kann. Der optische Hinweis weist auf einen oder mehrere vorbestimmte Abschnitte hin und kann optional zusätzlich eine Information über eine dem Abschnitt zugeordnete Funktion des Hausgeräts umfassen. Die Information kann beispielsweise einen Text oder ein Piktogramm umfassen. Der optische Hinweis oder ein Teil davon kann auch animiert werden, indem in rascher Folge Einzelbilder ausgegeben werden, die vom menschlichen Auge als sich bewegendes Bild wahrgenommen werden können.

Die Anzeigevorrichtung umfasst einen Projektor, der auf die Oberfläche gerichtet ist. Der Hinweis wird dabei vorzugsweise von der Seite auf die Oberfläche projiziert, von der aus auch der Impuls eingebracht werden kann. Dadurch ist es nicht erforderlich, einen transparenten Körper zu verwenden. Insbesondere eine unabhängig vom Hausgerät bestehende Wand oder ein Boden können dadurch verbessert für die Bedienung genutzt werden.

Der Ort kann bezüglich einer bekannten Ausbreitungsgeschwindigkeit von Körperschall in dem Körper bestimmt werden. Die Bestimmung des Orts kann mehrdeutig bezüglich einer Verbindungsgerade der beiden Körperschallsensoren sein. Kommt einer der Orte nicht in Frage, beispielsweise weil sich in diesem Bereich des Körpers das Hausgerät oder ein anderes Objekt befindet, so können zwei Körperschallsensoren für die Bestimmung des Orts ausreichen. Andernfalls kann ein dritter Körperschallsensor vorgesehen sein, wobei die Körperschallsensoren dazu eingerichtet sind, paarweise voneinander beabstandet an der Oberfläche des Körpers angebracht zu werden. Dabei sollte eine Konstellation vermieden werden, bei der die drei Körperschallsensoren auf einer gemeinsamen Verbindungslinie liegen. Generell können beliebig viele Körperschallsensoren eingesetzt werden, um eine Ortsauflösung zu verbessern.

Nach einem zweiten Aspekt der Erfindung umfasst ein Verfahren zum Steuern eines Hausgeräts Schritte des Bereitstellens eines optischen Hinweises auf einer Oberfläche eines vorbestimmten Körpers mittels einer Anzeigevorrichtung mit einem Projektor, der auf die Oberfläche gerichtet ist, wobei der optische Hinweis auf einen oder mehrere vorbestimmte Abschnitte hinweist; des Erfassens von Körperschall an voneinander beabstandeten Orten an der Oberfläche des vorbestimmten Körpers; des Bestimmens eines Orts an der Oberfläche des Körpers, an dem ein Impuls auf die Oberfläche einwirkt, der den erfassten Körperschall hervorruft; des Bestimmens, dass der Ort in einem vorbestimmten Abschnitt der Oberfläche liegt; und des Bestimmens einer dem Abschnitt zugeordneten Funktion des Hausgeräts.

Das Verfahren kann insbesondere mittels einer hierin beschriebenen Bedienvorrichtung, insbesondere deren Verarbeitungseinrichtung, ausgeführt werden. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auf einem computerlesbaren Datenträger abgespeichert sein. Merkmale oder Vorteile des Verfahrens können auf die Bedienvorrichtung übertragen werden oder umgekehrt.

Das Verfahren kann dazu beitragen, eine erleichterte Bedienung des Hausgeräts zu ermöglichen. Die vorgeschlagene unkonventionelle Bedienweise kann beispielsweise von einer Person mit körperlichen Einschränkungen oder einer älteren Person leichter genutzt werden. Das Verfahren umfasst ein Auslösen oder Steuern der bestimmten Funktion.

Es ist weiter bevorzugt, dass ein vorbestimmter Impuls auf der Basis eines Musters eines oder beider Sensorsignale erkannt wird. Das Muster kann insbesondere eine Amplitude umfassen. Ein Sensorsignal kann erst ausgewertet werden, wenn seine Amplitude einen vorbestimmten Schwellenwert übersteigt. Eine Fehlerkennung, beispielsweise durch ein leises Geräusch oder einen weit von den Körperschallsensoren in den Körper eingeleiteter Impuls können so verbessert nicht zur Steuerung des Hausgeräts verwendet werden. Eine Fehlbedienung kann somit verbessert ausgeschlossen sein.

Das Muster kann einen zeitlichen Verlauf des Signals eines der Sensoren betreffen. So kann berücksichtigt werden, wie lange ein auszuwertender Impuls dauern soll oder wie beispielsweise die zeitliche Entwicklung seiner Amplitude sein soll. Ein Geräusch, das zeitlich signifikant länger oder kürzer als das Muster ist, kann so verbessert unterdrückt werden.

Das Muster kann ein Frequenzspektrum des Signals betreffen. Wird der Impuls beispielsweise durch einen Fuß eines Benutzers in einen Boden eingebracht, so kann das dabei entstehende Geräusch an der Oberfläche des Körpers vermehrt hohe Frequenzen umfassen, wenn der Benutzer einen Schuh trug, und vermehrt niedrige Frequenzen, falls er barfuß war. So können verbessert nur solche Impulse verarbeitet werden, die einem Benutzer oder vorbestimmten Benutzungsumständen zuzurechnen sind.

Das Muster kann fest vorbestimmt sein oder ein Benutzer kann das Muster beeinflussen. In einer Ausführungsform kann der Benutzer die Bedienvorrichtung einlernen, indem er einen Impuls in einem vorbestimmten Abschnitt erzeugt, sodass dabei entstehende Signale der Körperschallsensoren dem Abschnitt zugeordnet werden können.

In einer weiteren Ausführungsform kann das Muster auch automatisch erlernt werden. Beispielsweise kann ein selbst adaptierendes Filter, ein Beobachter oder ein Kalman-Filter verwendet werden. In einer weiteren Ausführungsform kann ein Lernvorgang auch beispielsweise mittels eines neuronalen Netzwerks nachgebildet werden.

Die Erfindung wird nun unter Bezug auf die beiliegenden Figuren genauer beschrieben, in denen:
- Figur 1: eine Bedienvorrichtung für ein Hausgerät;
- Figur 2: ein Ablaufdiagramm eines Verfahrens;
- Figur 3: eine weitere Ausführungsform einer Bedienvorrichtung für ein Hausgerät; und
- Figur 4: noch eine weitere Ausführungsform einer Bedienvorrichtung für ein Hausgerät
darstellt.

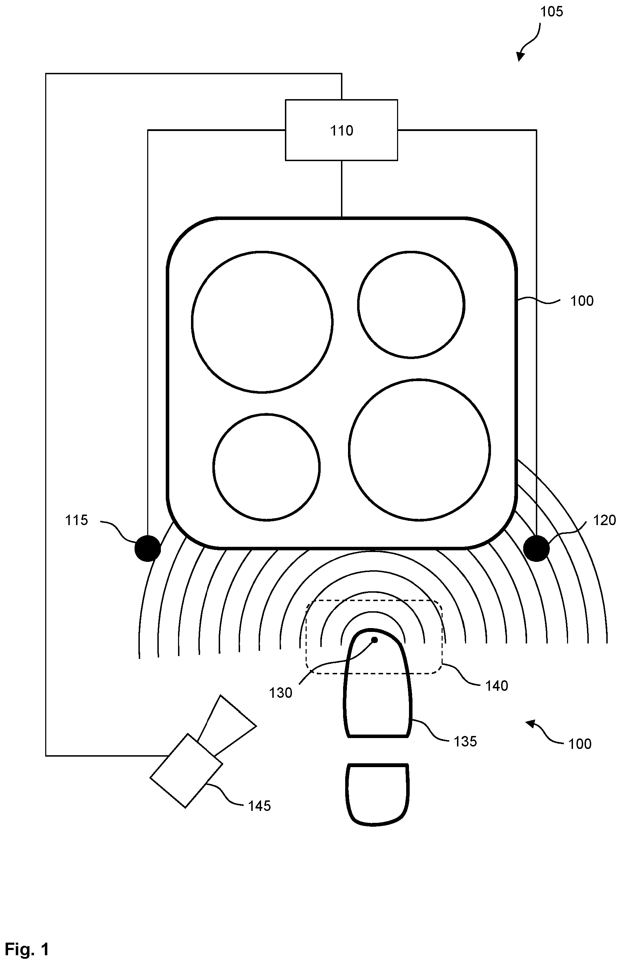

Figur 1 zeigt ein Hausgerät 100 mit einer Bedienvorrichtung 105. Das Hausgerät 100 ist exemplarisch als Herd dargestellt; in anderen Ausführungsformen kann auch ein beliebiges anderes Hausgerät, insbesondere ein Küchengerät, verwendet werden. Das Hausgerät 100 ist bevorzugt dazu eingerichtet, in einem Haushalt, insbesondere einem Privathaushalt, eingesetzt zu werden. Die Bedienvorrichtung 105 umfasst eine Verarbeitungseinrichtung 110, einen ersten Körperschallsensor 115 und einen zweiten Körperschallsensor 120. Weitere Körperschallsensoren können bei Bedarf hinzugefügt werden. Die Körperschallsensoren 115, 120 sind dazu eingerichtet, an der Oberfläche eines Körpers 125 angebracht zu werden. Es ist allgemein bevorzugt, dass der Körper in einem Bereich, der den vorbestimmten Abschnitt und gegebenenfalls die beiden Körperschallsensoren umfasst, im Wesentlichen eben ist.

In der vorliegenden Ausführungsform umfasst der Körper 125 beispielhaft einen Fußboden, auf dem ein Benutzer stehen kann und gegenüber dem das Hausgerät 100 abgestützt sein kann, beispielsweise mittels eines Unterbaus. Die Körperschallsensoren 115, 120 sind bevorzugt derart am Hausgerät 100 angebracht, dass sie an dem Körper 125 anliegen. Die Körperschallsensoren 115, 120 können gegenüber Vibrationen, die vom Hausgerät 100 ausgehen, isoliert sein, beispielsweise mittels elastischer Elemente und/oder Dämpfern. Im dargestellten Fall können die Körperschallsensoren 115, 120 beispielsweise an oder in einem Gerätefuß des Hausgeräts 100 oder in oder an dem Unterbau angebracht sein. In einer Ausführungsform, bei der der Körper 125 vom Hausgerät 100 umfasst ist, können die Körperschallsensoren 115, 120 unmittelbar am Körper 125 angebracht sein. Dabei ist eine Anbringung an der dem Benutzer zugewandten Oberfläche oder einer anderen Oberfläche, insbesondere einer entgegengesetzten, dem Benutzer abgewandten Oberfläche, möglich. Umfasst der Körper 125 beispielsweise ein Blech, so können die Körperschallsensoren 115, 120 wahlweise an einer inneren oder einer äußeren Seite des Blechs angebracht sein.

Die Körperschallsensoren 115, 120 sind dazu eingerichtet, Oberflächenwellen am Körper 125 zu erfassen, die durch einen Impuls an dessen Oberfläche ausgelöst werden. Die Oberflächenwellen können in einem vorbestimmten Frequenzspektrum liegen. In einer Ausführungsform werden nur Oberflächenwellen ausgewertet, deren Frequenz in einem für einen Menschen hörbaren Bereich liegen. In diesem Fall wird kann auch von akustischen Oberflächenwellen oder Körperschall gesprochen werden. Wird ein Impuls an einem Ort 130 in den Körper 125 eingebracht, beispielsweise durch einen Benutzer 135, so breiten sich die Wellen an der Oberfläche des Körpers 125 in Richtung der Körperschallsensoren 115, 120 aus. Beispielsweise mittels Triangulation kann der Ort 130 zumindest näherungsweise auf der Basis von Zeitpunkten bestimmt werden, zu denen zueinander korrespondierende Oberflächenwellen an den Körperschallsensoren 115, 120 empfangen wurden. Dazu kann insbesondere ein Laufzeitunterschied bestimmt werden, also eine Zeitdifferenz zwischen dem Eintreffen von Körperschall an dem ersten Körperschallsensor 115 und dem Eintreffen am zweiten Körperschallsensor 120.

Für eine Bestimmung des Orts 130 entlang einer Richtung, die durch eine Gerade durch die Körperschallsensoren 115, 120 gegeben ist, reichen zwei Körperschallsensoren 115, 120 bereits aus. Soll auch bestimmt werden, in welchem Abstand der Ort 130 von der Geraden liegt, so kann ein dritter Körperschallsensor vorgesehen werden, der nicht auf der Geraden liegt. Weitere Körperschallsensoren an der Oberfläche des Körpers 125 können zur Verbesserung der Genauigkeit des bestimmten Orts 130 eingesetzt werden.

Die Verarbeitungseinrichtung 110 ist bevorzugt dazu eingerichtet, zu bestimmen, ob der bestimmte Ort 130 in einem vorbestimmten Abschnitt 140 der Oberfläche des Körpers 125 liegt. Dem Abschnitt 140 kann eine Funktion des Hausgeräts 100 zugeordnet sein, die durch die Verarbeitungseinrichtung 110 bestimmt werden kann. Die Funktion kann dann ausgewählt, angesteuert oder durchgeführt werden.

In einer weiteren Ausführungsform kann auf entsprechende Weise beispielsweise ein numerischer Wert durch Erzeugen eines Impulses am Körper 125 ausgedrückt werden. Den Orten, an denen die Körperschallsensoren 115, 120 angebracht sind, können Bereichsgrenzen eines vorbestimmten numerischen Bereichs zugeordnet sein. Dadurch kann eine Skala definiert sein, und der Ort 130 kann auf die Skala abgebildet werden. In der dargestellten Ausführungsform kann dem ersten Körperschallsensor 115 beispielsweise der Wert 0, und dem zweiten Körperschallsensor 120 der Wert 10 zugeordnet sein. Dem dargestellten Ort 130 kann dementsprechend ungefähr der Wert 6 zugeordnet sein. Andere Bereichsgrenzen sind ebenfalls möglich, und die Skala kann außer linear auch beispielsweise logarithmisch unterteilt sein.

Der Benutzer 135 kann darüber orientiert werden, wo er einen Impuls in den Körper 125 einleiten muss, um eine vorbestimmte Steuerung des Hausgeräts 100 zu bewirken. Dazu kann eine Anzeigevorrichtung 145 vorgesehen sein, die einen optischen Hinweis auf die Oberfläche des Körpers 125 werfen kann. Die Anzeigevorrichtung 145 kann beispielsweise einen LCD- oder DLP-Projektor umfassen. Alternativ kann auch eine vektorielle Ausgabe mittels eines ablenkbaren Lasers vorgesehen sein.

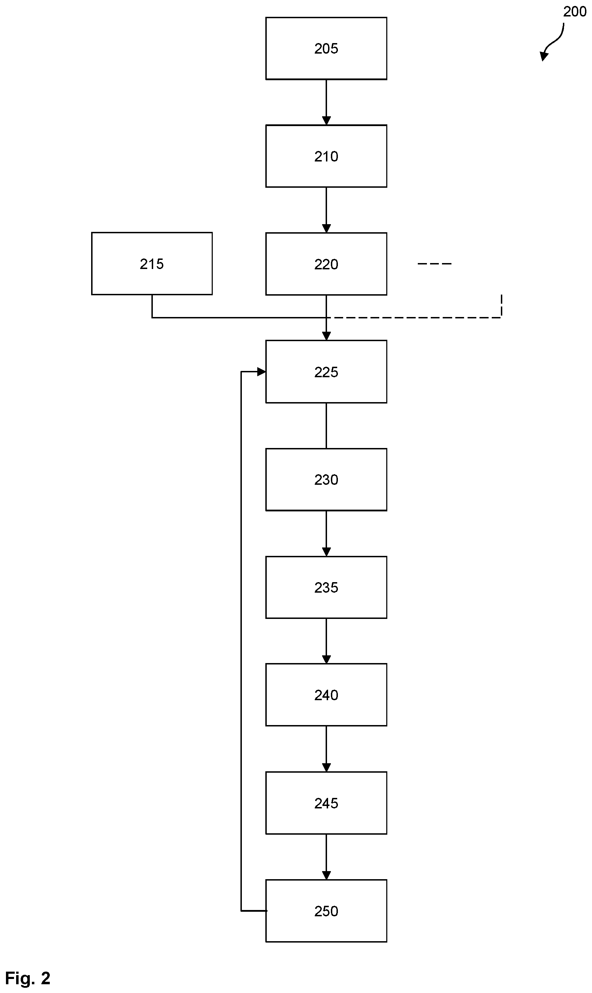

Figur 2 zeigt ein Ablaufdiagramm eines Verfahrens 200, das zur Steuerung eines Hausgeräts 100 verwendet werden kann. Das Verfahren 200 kann insbesondere in Verbindung mit einer hierin beschriebenen Bedienvorrichtung 105 durchgeführt werden.

In einem ersten Schritt 205 können ein Abschnitt 140 und/oder eine Funktion des Hausgeräts 100 bestimmt werden. Die Funktion ist bevorzugt dem Abschnitt 140 zugeordnet und kann dynamisch in Abhängigkeit eines Betriebszustands des Hausgeräts 100 bestimmt werden. **In** einem Schritt 210 kann ein Hinweis auf die bestimmte Funktion und/oder den bestimmten Abschnitt 140 mittels der Anzeigevorrichtung 145 auf der Oberfläche des Körpers 125 angezeigt werden. Der Hinweis kann beispielsweise eine Begrenzung des Abschnitts 140 umfassen; ein Symbol oder ein Text zur Charakterisierung der Funktion kann vom Hinweis umfasst sein.

In einem Schritt 215 kann Körperschall am ersten Körperschallsensor 115 erfasst werden. Gleichzeitig, kurz davor oder kurz danach kann in einem Schritt 220 Körperschall am zweiten Körperschallsensor 120 erfasst werden. In weiteren, nebenläufigen Schritten kann von einem oder mehreren weiteren Körperschallsensoren jeweils Körperschall erfasst werden.

In einem Schritt 225 kann ein Signal jedes der Körperschallsensoren 115, 120 mit einem vorbestimmten Muster verglichen werden. Das Muster kann so bestimmt sein, dass ein Impuls, der sich von einem vorbestimmten, durch einen Benutzer 135 in den Körper 125 eingebrachten Impuls unterscheidet, nicht weiter ausgewertet wird. Außerdem können die unterschiedlichen Sensorsignale miteinander verglichen werden, um sicherzustellen, dass sie einander in vorbestimmter Weise ähneln.

In einem Schritt 230 kann der Ort 130 auf der Basis von Zeitunterschieden bestimmt werden, zu denen jeweils ein Körperschallsignal an den unterschiedlichen Körperschallsensoren 115, 120 bestimmt wurde. Relative Abstände zwischen den Körperschallsensoren 115, 120 sind dazu vorteilhafterweise bekannt.

In einem Schritt 235 kann ein Abschnitt 140 bestimmt werden, der dem Ort 130 zugeordnet ist. Der Abschnitt 140 kann insbesondere dem im Schritt 210 dargestellten Abschnitt 140 entsprechen. Liegt der Ort 130 außerhalb des Abschnitts 140, so kann keine weitere Verarbeitung stattfinden. In einem Schritt 240 kann eine dem Abschnitt 140 zugeordnete Funktion des Hausgeräts 100 bestimmt werden. Diese Funktion kann im Schritt 205 festgelegt worden sein. Ein Hinweis auf die bestimmte Funktion kann ausgegeben werden, beispielsweise an den Benutzer 135 oder an eine weitere Steuervorrichtung zur Steuerung des Hausgeräts 100. Alternativ kann die Funktion in einem Schritt 245 auch gestartet, gesteuert oder durchgeführt werden.

In einem optionalen Schritt 250 kann das im Schritt 225 verwendete Muster auf der Basis der erfassten Sensorsignale verbessert werden. Dazu kann eine Bewertung des Benutzers 135 eingeholt werden, ob er mit einer der durchgeführten Bestimmungen einverstanden ist oder nicht.

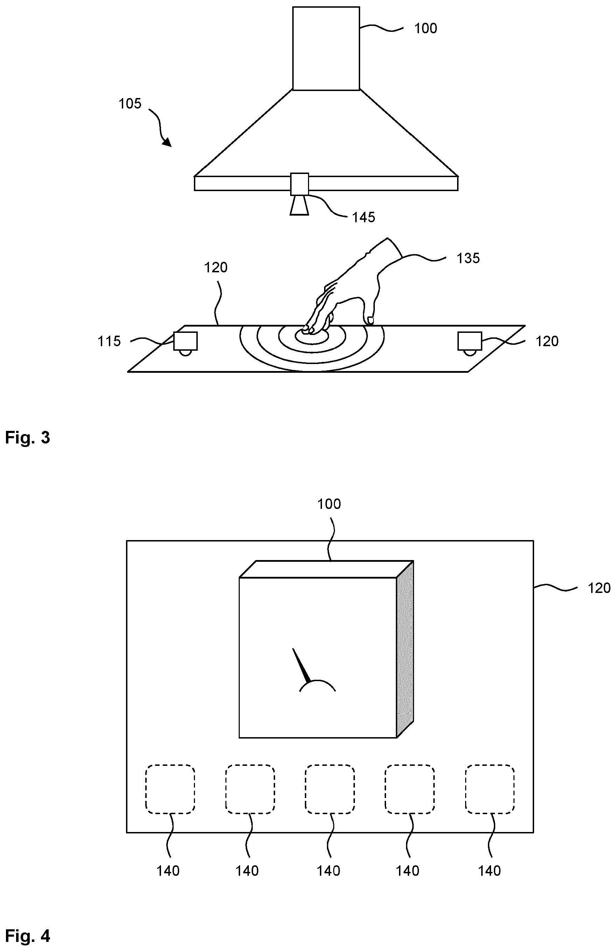

Figur 3 zeigt eine weitere Ausführungsform einer Bedienvorrichtung 105 für ein Hausgerät 100. In der dargestellten Ausführungsform umfasst das Hausgerät 100 beispielhaft eine Dunstabzugshaube oder ein anderes Gerät, das in einigem Abstand von dem Körper 125, der hier als Herd oder Arbeitsfläche ausgebildet ist, angebracht ist. In diesem Fall kann die Projektion durch die Anzeigevorrichtung 145 von dem Hausgerät 100 aus erfolgen. Die Körperschallsensoren 115, 120 können getrennt vom Hausgerät 100 an der Oberfläche des Körpers 125 angebracht sein.

Figur 4 zeigt noch eine weitere Ausführungsform einer Bedienvorrichtung 105 für ein Hausgerät 100. Das Hausgerät 100 ist an einer Wand angebracht, die als Körper 125 dienen kann. Rein beispielhaft ist das Hausgerät 100 als Waage dargestellt, wobei die Waagschale nicht eingezeichnet ist. Die Körperschallsensoren 115, 120 können an der Wand 125 anliegen; dabei können sie innerhalb eines Gehäuses des Hausgeräts 100 oder außerhalb angebracht sein. An der Wand 125 können einer oder mehrere Abschnitte 140 vorgesehen sein, die in der vorliegenden Ausführungsform exemplarisch nicht durch eine Anzeigevorrichtung 145 umrissen sind, sondern durch fest an der Wand 125 angebrachte Markierungen. Formen und Größen der Abschnitte 140 können wie dargestellt gleichförmig sein oder voneinander abweichen. Auch Abstände zwischen den Abschnitten 140 können regelmäßig oder unregelmäßig sein.

### Bezugszeichen

- 100: Hausgerät
- 105: Bedienvorrichtung
- 110: Verarbeitungseinrichtung
- 115: erster Körperschallsensor
- 120: zweiter Körperschallsensor
- 125: Körper (Wand, Fußboden)
- 130: Ort
- 135: Benutzer
- 140: Abschnitt
- 145: Anzeigevorrichtung

- 200: Verfahren
- 205: Bestimmen Funktion und/oder Abschnitt
- 210: Anzeigen Hinweis auf Funktion und/oder Abschnitt
- 215: Erfassen Körperschall erster Sensor
- 220: Erfassen Körperschall zweiter Sensor
- 225: Mustervergleich
- 230: Bestimmen Ort
- 235: Bestimmen zugeordneter Abschnitt
- 240: Bestimmen zugeordnete Funktion
- 245: Steuern Funktion
- 250: Lernen Muster

## Patentansprüche

1. **Bedienvorrichtung** (105) für ein Hausgerät (100), wobei die Bedienvorrichtung (105) folgendes umfasst:
- einen ersten und einen zweiten Körperschallsensor (115, 120),
- wobei die Körperschallsensoren (115, 120) dazu eingerichtet sind, beabstandet voneinander an der Oberfläche eines vorbestimmten Körpers (125) angebracht zu werden; und
- eine Verarbeitungseinrichtung (110), die dazu eingerichtet ist:
∘ auf der Basis von Sensorwerten der Körperschallsensoren (115, 120) einen Ort (130) an der Oberfläche des Körpers (125) zu bestimmen, an dem ein Impuls in den Körper (125) eingeleitet wurde;
∘ zu bestimmen, dass der Ort (130) in einem vorbestimmten Abschnitt (140) der Oberfläche liegt;
∘ eine Funktion des Hausgeräts (100) zu bestimmen, die dem Abschnitt (140) zugeordnet ist; und
∘ die bestimmte Funktion in dem Hausgerät (100) auszulösen oder zu steuern;
**dadurch gekennzeichnet, dass**
die Bedienvorrichtung weiterhin eine Anzeigevorrichtung (145) mit einem Projektor aufweist, wobei der Projektor auf die Oberfläche gerichtet ist und die Anzeigevorrichtung (145) dazu ausgebildet ist, einen optischen Hinweis auf der Oberfläche bereitzustellen, wobei der optische Hinweis auf einen oder mehrere vorbestimmte Abschnitte hinweist.

2. Bedienvorrichtung (105) nach Anspruch 1, ferner umfassend einen weiteren Körperschallsensor (115, 120), wobei die Körperschallsensoren (115, 120) dazu eingerichtet sind, paarweise beabstandet voneinander an der Oberfläche des Körpers (125) angebracht zu werden.

3. Hausgerät (100) mit einer Bedienvorrichtung nach Anspruch 1 oder 2, wobei der Körper (125) vom Hausgerät (100) umfasst ist.

4. Hausgerät (100) mit einer Bedienvorrichtung nach Anspruch 1 oder 2, wobei das Hausgerät (100) dazu eingerichtet ist, an dem Körper (125) anzuliegen.

5. Verfahren (200) zum Steuern eines Hausgeräts (100), folgende Schritte umfassend:
- Bereitstellen eines optischen Hinweises auf einer Oberfläche eines vorbestimmten Körpers (125) mittels einer Anzeigevorrichtung (145) mit einem Projektor, der auf die Oberfläche gerichtet ist, wobei der optische Hinweis auf einen oder mehrere vorbestimmte Abschnitte hinweist;
- Erfassen (215, 220) von Körperschall an voneinander beabstandeten Orten an der Oberfläche;
- Bestimmen (230) eines Orts (130) an der Oberfläche des Körpers (125), an dem ein Impuls auf die Oberfläche einwirkt, der den erfassten Körperschall hervorruft;
- Bestimmen (235), dass der Ort (130) in einem vorbestimmten Abschnitt (140) der Oberfläche liegt; und
- Bestimmen (240) einer dem Abschnitt (140) zugeordneten Funktion des Hausgeräts (100); und
- Auslösen oder Steuern der bestimmten Funktion des Hausgeräts (100).

6. Verfahren (200) nach Anspruch 5, wobei ein vorbestimmter Impuls auf der Basis eines Musters eines der Sensorsignale erkannt wird.

7. Verfahren (200) nach Anspruch 6, wobei das Muster einen zeitlichen Verlauf des Signals betrifft.

8. Verfahren (200) nach Anspruch 6 oder 7, wobei das Muster ein Frequenzspektrum des Signals betrifft.

9. Verfahren (200) nach einem der Ansprüche 6 bis 8, wobei das Muster automatisch erlernt wird.

## Claims

1. Control apparatus (105) for a household appliance (100), wherein the control apparatus (105) comprises the following:
- a first and a second solid borne sound sensor (115, 120),
- wherein the solid borne sound sensors (115, 120) are designed to be attached to the surface of a predetermined body (125) at a distance from one another; and
- a processing facility (110), which is designed:
• to determine a location (130) on the surface of the body (125), to which a pulse has been introduced into the body (1250), on the basis of sensor values of the solid borne sound sensors (115, 120);
• to determine that the location (130) lies in a predetermined section (140) of the surface;
• to determine a function of the household appliance (100) which is assigned to the section (140); and
• to trigger or control the specific function in the household appliance (100);
**characterised in that**
the control apparatus further has a display apparatus (145) with a projector, wherein the projector is aligned with the surface and the display apparatus (145) is embodied to provide a visual indication on the surface, wherein the visual indication indicates one or more predetermined sections.

2. Control apparatus (105) according to claim 1, furthermore comprising a further solid borne sound sensor (115, 120), wherein the solid borne sound sensors (115, 120) are designed to be attached to the surface of the body (1250) in pairs at a distance from one another.

3. Household appliance (100) with a control apparatus according to claim 1 or 2, wherein the body (1250) is included in the household appliance (100).

4. Household appliance (100) with a control apparatus according to claim 1 or 2, wherein the household appliance (100) is designed to rest against the body (125).

5. Method (200) for controlling a household appliance (100), comprising the following steps:
- providing a visual indication on a surface of a predetermined body (125) by means of a display apparatus (145) with a projector which is directed at the surface, wherein the visual indication indicates one or more predetermined sections;
- detecting (215, 220) solid borne sound at locations on the surface which are at a distance from one another;
- determining (230) a location (130) on the surface of the body (125) at which a pulse acts on the surface which causes the detected solid borne sound;
- determining (235) that the location (130) is in a predetermined section (140) of the surface; and
- determining (240) a function of the household appliance (100) assigned to the section (140); and
- triggering or controlling the specific function of the household appliance (100).

6. Method (200) according to claim 5, wherein a predetermined pulse is identified on the basis of a pattern of one of the sensor signals.

7. Method (200) according to claim 6, wherein the pattern relates to a temporal course of the signal.

8. Method (200) according to claim 6 or 7, wherein the pattern relates to a frequency spectrum of the signal.

9. Method (200) according to one of claims 6 to 8, wherein the pattern is learnt automatically.

## Revendications

1. Dispositif de commande (105) pour un appareil ménager (100), dans lequel le dispositif de commande (105) comprend :
- un premier et un deuxième capteur de bruit de structure (115, 120),
- dans lequel les capteurs de bruit de structure (115, 120) sont conçus pour être montés à distance l'un de l'autre à la surface d'un corps (125) prédéterminé ; et
- un dispositif de traitement (110) qui est conçu pour :
∘ déterminer, sur la base des valeurs mesurées par les capteurs de bruit de structure (115, 120), un emplacement (130) à la surface du corps (125) où une impulsion a été introduite dans le corps (125) ;
∘ déterminer que l'emplacement (130) se trouve dans une section (140) prédéterminée de la surface ;
∘ déterminer une fonction de l'appareil ménager (100) qui est associée à la section (140) ; et
o déclencher ou commander une fonction déterminée dans l'appareil ménager (100) ;
**caractérisé en ce que**
le dispositif de commande comprend en outre un dispositif d'affichage (145) avec un projecteur, dans lequel le projecteur est dirigé vers la surface et le dispositif d'affichage (145) est conçu pour afficher une indication visuelle sur la surface, dans lequel l'indication optique indique une ou plusieurs sections prédéterminées.

2. Dispositif de commande (105) selon la revendication 1, comprenant en outre un autre capteur de bruit de structure (115, 120), dans lequel les capteurs de bruit de structure (115, 120) sont conçus pour être montés par paires espacées l'une de l'autre sur la surface du corps (125).

3. Appareil ménager (100) avec un dispositif de commande selon la revendication 1 ou la revendication 2, dans lequel le corps (125) est entouré par l'appareil ménager (100).

4. Appareil ménager (100) avec un dispositif de commande selon la revendication 1 ou la revendication 2, dans lequel l'appareil ménager (100) est conçu pour s'appuyer contre le corps (125).

5. Procédé (200) pour commander un appareil ménager (100), comprenant les étapes suivantes :
- fournir une indication visuelle sur une surface d'un corps (125) prédéterminé au moyen d'un dispositif d'affichage (145) comprenant un projecteur dirigé vers la surface, dans lequel l'indication visuelle indique une ou plusieurs sections prédéterminées ;
- détecter (215, 220) des bruits de structure à des emplacements espacés les uns des autres à la surface ;
- déterminer (230) un emplacement (130) à la surface du corps (125) où une impulsion agit sur la surface, provoquant le bruit de structure détecté ;
- déterminer (235) que l'emplacement (130) se trouve dans une section (140) prédéterminée de la surface ; et
- déterminer (240) une fonction de l'appareil ménager (100) associée à la section (140) ; et
- déclencher ou commander la fonction déterminée de l'appareil ménager (100).

6. Procédé (200) selon la revendication 5, dans lequel une impulsion prédéterminée est détectée sur la base d'un modèle de l'un des signaux de capteur.

7. Procédé (200) selon la revendication 6, dans lequel le modèle concerne le déroulement temporel du signal.

8. Procédé (200) selon la revendication 6 ou la revendication 7, dans lequel le modèle concerne un spectre de fréquences du signal.

9. Procédé (200) selon l'une des revendications 6 à 8, dans lequel le modèle est appris automatiquement.
